# EUROPEAN PATENT SPECIFICATION

(11) **EP 1 999 351 B1**
(45) Date of publication and mention of the grant of the patent: **31.07.2013**
(21) Application number: 07716116.4
(22) Date of filing: 13.03.2007
(51) Int. Cl.: F02B 29/04, F01P 11/20, F02M 25/07, F01P 3/20

(54) **COOLING ARRANGEMENT IN A VEHICLE**
KÜHLANORDNUNG IN EINEM FAHRZEUG
DISPOSITIF DE REFROIDISSEMENT DANS UN VEHICULE

(30) Priority: 21.03.2006 SE 0600633
(43) Date of publication of application: 10.12.2008
(73) Proprietor: Scania CV AB, 151 87 Södertälje (SE)
(72) Inventor: KARDOS, Zoltan, S-15135 Södertälje (SE); PETTERSSON, Rickard, S-14451 Rönninge (SE)
(86) International application number: PCT/SE2007/050147
(87) International publication number: WO 2007/108761

(56) References cited:
- WO-A1-2005/033489
- WO-A1-2006/040053
- WO-A1-2006/054939
- DE-A1- 2 008 159
- DE-A1- 3 136 673
- JP-A- 2002 188 526
- US-A- 2 558 797
- US-A- 5 215 044
- US-B1- 6 619 379
- US-B2- 6 952 932

## Description

### BACKGROUND TO THE INVENTION, AND TECHNICAL FIELD

The present invention relates to a cooler arrangement for a vehicle according to the preamble of claim 1.

The amount of air which can be supplied to a supercharged engine depends on the pressure of the air but also on the temperature of the air. Supplying the largest possible amount of air to the combustion engine entails cooling the compressed air in a charge air cooler before it is led to the combustion engine. The compressed air is usually cooled, in a charge air cooler situated at a front portion of a vehicle, by surrounding air. The compressed air can thus be cooled to a temperature substantially corresponding to the temperature of the surroundings. In cold weather conditions the compressed air in a charge air cooler is usually cooled to a temperature which is lower than the dewpoint temperature of the air, resulting in the precipitation of water vapour in liquid form in the charge air cooler. When the temperature of the surrounding air is lower than 0°C, there is also risk of the precipitated water freezing to ice within the charge air cooler. Such ice formation will cause a greater or lesser degree of obstruction of the air flow ducts within the charge air cooler, resulting in reduced flow of air to the combustion engine and consequent operational malfunctions or stoppages. Means for avoiding such situations are known from DE 2008159 and US 2558797.

The technique known as EGR (Exhaust Gas Recirculation) is a known way of recirculating part of the exhaust gases from a combustion process in a combustion engine. The recirculating exhaust gases are mixed with the inlet air to the combustion engine before the mixture is led to the cylinders of the combustion engine. The addition of exhaust gases to the air causes a lower combustion temperature resulting inter alia in a reduced content of nitrogen oxides NOₓ in the exhaust gases. This technique is used for both Otto engines and diesel engines. The recirculating exhaust gases are cooled in at least one EGR cooler before they are mixed with the inlet air. The use of EGR coolers in which recirculating exhaust gases are cooled by surrounding air is a known practice. The recirculating exhaust gases may thereby also be cooled to a temperature substantially corresponding to the temperature of the surroundings. Exhaust gases contain water vapour which condenses within the EGR cooler when the exhaust gases are cooled to a temperature which is lower than the dewpoint of water vapour. In cases where the temperature of the surrounding air is below 0°C, there is also risk of the condensed water freezing to ice within the EGR cooler. Such ice formation will cause a greater or lesser degree of obstruction of the exhaust gas flow ducts within the EGR cooler, thereby increasing the content of nitrogen oxides in the exhaust gases.

### SUMMARY OF THE INVENTION

The object of the present invention is to provide a cooler arrangement which comprises an air-cooled cooler for cooling a gaseous medium whereby the gaseous medium is preventing from cooling below a lowest acceptable temperature even in circumstances where the cooling air is at a very low temperature.

This object is achieved with a cooler arrangement of the kind mentioned in the introduction which is characterised by the features indicated in the characterising part of claim 1. According to the invention, the cooler arrangement thus comprises a heat-supplying element fitted at a location upstream from the cooler with respect to the direction of the cooling air flow. In circumstances where there is risk of the medium in the cooler being cooled to below the lowest acceptable temperature, the heat-supplying element will be activated so that it heats the air passing through the heat-supplying element. The cooling air flow will thus be at a higher temperature than the surroundings when it reaches the cooler situated downstream. The air flow will with advantage be heated to a temperature corresponding to at least the lowest acceptable temperature of the medium, thereby ensuring that the gaseous medium in the cooler cannot be cooled to a temperature below the lowest acceptable temperature by the air flow. Gaseous media which include air contain water vapour. When such a gaseous medium is cooled to a temperature below the dewpoint of water vapour, water in liquid form is precipitated within the cooler. If the gaseous medium is cooled to a temperature below 0°C, the precipitated water will freeze to ice within the cooler. The aforesaid lowest acceptable temperature of the medium refers primarily to the gaseous medium not being cooled to a temperature below 0°C, which would result in ice formation within the cooler, but in practice a safety margin of a couple of degrees may be applicable for ensuring that ice formation does not occur in any part of the cooler. The possibility is nevertheless not excluded that said lowest acceptable temperature may refer to other temperatures and other phenomena than ice formation, e.g. it may be desirable to prevent too much condensation in the cooler.

According to a preferred embodiment of the present invention, said cooler is a charge air cooler and said medium is compressed air which is led to the combustion engine. Most diesel-powered combustion engines and many petrol-powered combustion engines are supercharged, i.e. they comprise a turbo unit which draws in and compresses surrounding air which is led to the combustion engine. The surrounding air contains water vapour in an amount which varies with the moisture content of the surrounding air. It is often difficult to prevent water vapour condensing in the cooler when the compressed air has a higher dewpoint than air at the pressure of the surroundings. The compressed air has however not to be cooled in the charge air cooler to a temperature below 0°C, since this would result in condensed water vapour freezing to ice. Said cooler may be an EGR cooler and said medium may be exhaust gases which are recirculated to the combustion engine. Exhaust gases contain a relatively large proportion of water vapour which may condense in the EGR cooler. The recirculating exhaust gases have therefore likewise not to be cooled in the EGR cooler to a temperature below 0°C, since this would result in the condensed water vapour freezing to ice in the EGR cooler.

According to another embodiment of the invention, said control means comprises a control unit adapted to activating the heat-supplying element on the basis of information from at least one sensor which detects a parameter related to the temperature of the gaseous medium in the cooler. The control unit may be a computer unit provided with software adapted to evaluating when the heat-supplying element needs to be activated. The heat-supplying element can thus be activated and switched off automatically by the control unit during operation of the vehicle. Alternatively or in combination, said control means may comprise an operating means in the form of a button or the like by which the heat-supplying element can be activated manually. Said sensor may be a temperature sensor adapted to detecting the temperature of the gaseous medium substantially immediately after it leaves the cooler. Since the gaseous medium is gradually cooled as it passes through the cooler, it will be at its lowest temperature when it leaves the cooler. If the gaseous medium is at a temperature corresponding to at least the lowest acceptable temperature when it leaves the cooler, it is unlikely to have been at a lower temperature at any point on its way through the cooler.

According to the invention, the heat-supplying element is a heat exchanger adapted to having a heat-supplying medium flowing through it in situations where there is risk of the gaseous medium in the cooler cooling to below the lowest acceptable temperature. The configuration of such a heat exchanger needs to be such that it provides effective and substantially uniform heating of the cooling air flow before it reaches the cooler situated downstream. Said control means comprises valve means by which it is possible to regulate the supply of the heat-supplying medium to the heat exchanger. The flow of the heat-supplying medium to the heat exchanger can be easily and reliably regulated by placing the valve means in a desired position. The construction of the valve means may be such as to allow adjustable setting of the flow of the heat-supplying medium to the heat exchanger.

According to the invention, the heat-supplying medium is a coolant used in a cooling system for cooling the combustion engine. During operation of the combustion engine, the coolant in the cooling system will normally be at a substantially constant relatively high temperature. It is therefore highly advantageous to use the coolant as a heat-supplying medium in this context. If some other cooling system is used for cooling some components of the vehicle, the coolant in that cooling system may be used as a heat-supplying medium. A heat-supplying medium directly or indirectly heated by exhaust gases from the combustion engine may perhaps also be used. Said control means is adapted to also initiating a supply of coolant to the heat exchanger in situations where the coolant in the cooling system needs extra cooling. The cooling system for cooling the combustion engine is also increasingly being used for cooling other vehicle components such as retarders and recirculating exhaust gases. In circumstances where the cooling system's ordinary radiator is not sufficient for keeping the coolant below a highest acceptable temperature, said heat exchanger may be activated and used as an extra cooler. Alternatively, the heat exchanger may be activated as soon as a component which requires cooling, e.g. a retarder, is activated. With advantage, said heat-supplying element and said cooler are fitted in a region situated at a front portion of the vehicle. The heat-supplying element will then be at least partly situated ahead of the radiator. In such cases the forward movement of the vehicle and possibly a radiator fan will create an air flow in a specific direction which first passes through the heat-supplying element before passing through the radiator.

### BRIEF DESCRIPTION OF THE DRAWINGS

A preferred embodiment of the present invention is described below by way of example with reference to the attached drawing, in which:

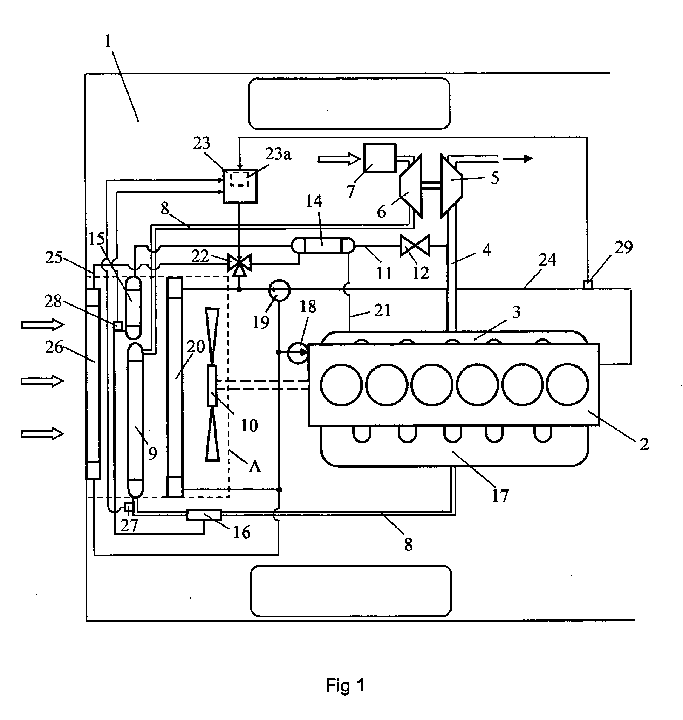

- Fig. 1: depicts a cooler arrangement of a vehicle according to an embodiment of the present invention.

### DETAILED DESCRIPTION OF A PREFERRED EMBODIMENT OF THE INVENTION

Fig. 1 depicts a vehicle 1 powered by a supercharged combustion engine 2. The vehicle 1 may be a heavy vehicle powered by a supercharged diesel engine. The exhaust gases from the cylinders of the combustion engine 2 are led via an exhaust manifold 3 to an exhaust line 4. The exhaust gases in the exhaust line 4, which are at above atmospheric pressure, are led to a turbine 5 of a turbo unit. The turbine 5 is thus provided with driving power which is transferred, via a connection, to a compressor 6. The compressor 6 uses this power to compress air, which is then led into an inlet line 8 via an air filter 7. A charge air cooler 9 is arranged in the inlet line 8. The charge air cooler 9 is arranged in a region A at a front portion of the vehicle 1. The function of the charge air cooler 9 is to cool the compressed air before it is led to the combustion engine 2. The compressed air is cooled in the charge air cooler 9 by surrounding air which is caused to flow through the charge air cooler 9 in a specific direction by a radiator fan 10. The radiator fan 10 is powered by the combustion engine 2 via a suitable connection.

The combustion engine 2 is provided with an EGR (Exhaust Gas Recirculation) system for recirculation of exhaust gases. Adding exhaust gases to the compressed air led to the engine's cylinders lowers the combustion temperature and hence also the content of nitrogen oxides (NOₓ) formed during the combustion processes. A return line 11 for recirculation of exhaust gases extends from the exhaust line 4 to the inlet line 8. The return line 11 comprises an EGR valve 12 by which the exhaust flow in the return line 11 can be shut off. The EGR valve 12 may also be used for steplessly controlling the amount of exhaust gases led from the exhaust line 4 to the inlet line 8 via the return line 11. The return line 11 comprises a first EGR cooler 14 for subjecting the exhaust gases to a first stage of cooling, and a second EGR cooler 15 for subjecting the exhaust gases to a second stage of cooling. In supercharged diesel engines 2, in certain operating situations, the pressure of the exhaust gases in the exhaust line 4 will be lower than the pressure of the compressed air in the inlet line 8. In such situations it is not possible to mix the exhaust gases in the return line 11 directly with the compressed air in the inlet line 8 without special auxiliary means. To this end it is possible to use, for example, a venturi 16. If instead the combustion engine 2 is a supercharged Otto engine, the exhaust gases in the return line 11 can be led directly into the inlet line 8, since the exhaust gases in the exhaust line 4 of an Otto engine in substantially all operating situations will be at a higher pressure than the compressed air in the inlet line 8. When the exhaust gases have mixed with the compressed air in the inlet line 8, the mixture is led via a manifold 17 to the respective cylinders of the combustion engine 2.

The combustion engine 2 is cooled in a conventional manner by a cooling system which contains a circulating coolant. The coolant is circulated in the cooling system by a coolant pump 18. The cooling system also comprises a thermostat 19. The coolant in the cooling system is intended to be cooled in a radiator 20 fitted at a forward portion of the vehicle 1, downstream from the charge air cooler 9 and the second EGR cooler 15 with respect to the air flow direction in the region A. The coolant in the cooling system is also used for subjecting the recirculating exhaust gases to a first stage of cooling in the first EGR cooler 14. To this end, the cooling system comprises a manifold in the form of a line 21 which initially leads coolant to the first EGR cooler 14 for the first stage of cooling the recirculating exhaust gases. The first EGR cooler 14 may be fitted on or close to the combustion engine 2. The recirculating exhaust gases may here be cooled from a temperature of about 500-600°C to a temperature in the vicinity of the temperature of the coolant, which is usually within the range 70-90°C.

When the coolant has passed through the first EGR cooler 14, it is led to a valve means 22. An electrical control unit 23 in the form of a computer unit provided with suitable software 23a is adapted to placing the valve means 22 in various positions. When the control unit places the valve means 22 in a first position, the coolant is led from the first EGR cooler 14 to a line 24 where it joins coolant coming from the combustion engine 2. The coolant is led via the line 24 to the radiator 20 where it is cooled before being reused for cooling the combustion engine 2 or the recirculating exhaust gases in the first EGR cooler 14. When the control unit 23 places the valve means 22 in a second position, the coolant from the first EGR cooler 14 is led via a line 25 to a heat exchanger 26. The heat exchanger 26 is fitted at a location upstream from the charge air cooler 9 and the second EGR cooler 15 with respect to the specific direction of the cooling air flow in the region A so that at least a major part of the air flowing through the heat exchanger 26 also flows through the charge air cooler 9 and the second EGR cooler 15. For it to place the valve means 22 in a correct position, the control unit 23 receives information from a first temperature sensor 27 and a second temperature sensor 28. The first temperature sensor 27 detects the temperature of the compressed air immediately after it leaves the charge air cooler 9. The second temperature sensor 28 detects the temperature of the recirculating exhaust gases immediately after they leave the second EGR cooler 15. The control unit 23 also receives information from a third temperature sensor 29 which detects the coolant's temperature after it has cooled the combustion engine 2.

In this case, the compressed air in the charge air cooler 9 and the recirculating exhaust gases in the second EGR cooler 15 are therefore cooled by a cooling air flow of surrounding air. It is thus possible to cool the compressed air and the exhaust gases to a temperature substantially corresponding to the temperature of the surroundings. The air and the exhaust gases are cooled so that they occupy less volume, thereby making it possible to supply a large amount of air and recirculating exhaust gases to the cylinders of the combustion engine. When the temperature of the surroundings is low, water vapour in the compressed air condenses in the charge air cooler 9 and water vapour in the exhaust gases condenses in the second EGR cooler 15. If the surrounding temperature is below 0°C, there is also risk of condensed water vapour freezing to ice in the respective coolers 9, 15. The air flow ducts in the charge air cooler 9 and the exhaust gas flow ducts in the second EGR cooler may thus become obstructed. The compressed air and the exhaust gases have therefore not to be cooled to a temperature lower than 0°C.

During operation of the combustion engine 2, the control unit 23 receives information from the first sensor 27 concerning the temperature of the compressed air after it has been cooled in the charge air cooler 9, and information from the second sensor 28 concerning the temperature of the recirculating exhaust gases after they have been cooled in the second EGR cooler 15. The control unit 23 compares temperature values received with a reference temperature. To prevent ice formation in the charge air cooler 9 and the second EGR cooler 15, a reference temperature of 0°C may be used. To provide a safety margin against ice formation within the charge air cooler 9 and the second EGR cooler 15, the control unit 23 may compare temperature values received with a reference temperature which is somewhat higher than 0°C. So long as the control unit 23 receives information from the first sensor 27 that the temperature of the compressed air after cooling in the charge air cooler 9 is above the reference temperature, and from the second sensor 28 that the temperature of the recirculating exhaust gases is above the reference temperature, the control unit 23 will place the valve means in the first position, whereby the coolant circulating through the first EGR cooler 14 will be led to the cooling system's ordinary radiator 20. In this situation, no coolant will be led to the heat exchanger 26. The cooling air flow will therefore not be subject to any heating as it passes through the heat exchanger 26 and will still be at the temperature of the surroundings when it reaches the charge air cooler 9 and the second EGR cooler 15.

If the control unit 23 receives information from either of the sensors 27, 28 that the compressed air or the recirculating exhaust gases have been cooled to a temperature below the reference temperature, the control unit 23 will place the valve means 22 in the second position, whereby the warm coolant from the first EGR cooler 14 will be led via the valve means 22 and the line 25 to the heat exchanger 26. The air flowing through the heat exchanger 26 will thus receive heat from the cooling air flow before it reaches the charge air cooler 9 and the second EGR cooler 15. The cooling of the compressed air in the charge air cooler 9 and the exhaust gases in the second EGR cooler 15 will thus be considerably reduced. The heat exchanger 26 may be dimensioned to heat the cooling air flow to a temperature higher than 0°C. There will therefore be assurance that the compressed air in the charge air cooler 9 and the recirculating exhaust gases in the second EGR cooler 15 will not be cooled to a temperature below 0°C, thus totally eliminating the risk of ice formation within the charge air cooler 9 and the second EGR cooler 15.

In certain circumstances there is risk of the cooling system being overloaded, i.e. the coolant in the cooling system being at too high a temperature. Such circumstances may for example occur when the combustion engine is under heavy load at a time of high surrounding temperature. If the cooling system for the combustion engine is also used for cooling other components of the vehicle, e.g. a retarder, which require a large cooling capacity, the cooling system may also be overloaded when the retarder is used. In such circumstances it is possible to use an existing heat exchanger 26 as an extra cooler, thereby providing the cooling system with extra cooling capacity which will prevent overheating of the coolant. To this end, the control unit 23 may have the extra function of receiving information from a sensor 29 concerning the temperature of the coolant after it has left the combustion engine 2. The coolant in the cooling system will normally be at its highest temperature after it has cooled the combustion engine 2. The control unit 23 is adapted to comparing the coolant's temperature with a reference temperature which the coolant should not exceed. If the temperature of the coolant exceeds the reference temperature, the control unit 23 places the valve means 22 in the second position, whereby warm coolant flows through the heat exchanger 26 and is cooled therein by the cooling air flow. In this situation, the coolant in the cooling system is cooled both in the ordinary radiator 20 and in the heat exchanger 26. The cooling system is thus provided with extra cooling capacity so that overload of the cooling system is prevented.

The invention is in no way limited to the embodiments to which the drawing refers but may be varied freely within the scopes of the claims. The heat exchanger may be used for heating a cooling air flow which only passes through a charge air cooler or through an EGR cooler. The heat exchanger need not heat the whole of the cooling air flow which reaches the charge air cooler or the EGR cooler.

## Claims

1. A cooler arrangement of a vehicle (1) which is powered by a combustion engine (2), whereby the cooler arrangement comprises at least one cooler (9, 15) which has flowing through it a gaseous medium adapted to being cooled by an external air flow which flows in a specific direction through the cooler (9, 15) during operation of the combustion engine (2), a heat- supplying element (26) fitted at a location upstream from said cooler (9, 15) with respect to the specific direction of the cooling air flow so that at least part of the air flowing through the heat-supplying element (26) also flows through the cooler (9, 15), and control means (22, 23) adapted to activating the heat-supplying element (26) so that the air flowing through the heat-supplying element (26) is heated during situations where there is risk of the gaseous medium in the cooler (9, 15) being cooled to below a lowest acceptable temperature, wherein the heat-supplying element is a heat exchanger (26) adapted to having a heat- supplying medium flowing through it during situations where there is risk of the gaseous medium in the cooler (9, 15) being cooled to below said lowest acceptable temperature, said control means comprises a valve means (22) by which it is possible to regulate the supply of the heat-supplying medium to the heat exchanger (26), and wherein the heat-supplying medium is a coolant which is used in a cooling system for cooling the combustion engine (2), **characterised in that** said control means (22, 23) is also adapted to initiating a supply of the coolant to the heat exchanger (26) during situations where the coolant in the cooling system needs extra cooling.

2. A cooler arrangement according to claim 1, **characterised in that** said cooler is a charge air cooler (9) and that said gaseous medium is compressed air which is led to the combustion engine (2).

3. A cooler arrangement according to claim 1 , **characterised in that** said cooler is an EGR cooler (15) and that said gaseous medium takes the form of exhaust gases which are recirculated to the combustion engine (2).

4. A cooler arrangement according to any one of the foregoing claims, **characterised in that** said control means comprises a control unit (23) adapted to activating the heat-supplying element (26) on the basis of information from at least one sensor (27, 28) which detects a parameter related to the temperature of the gaseous medium in the cooler (9, 15).

5. A cooler arrangement according to claim 4, **characterised in that** said sensor is a temperature sensor (27, 28) adapted to detecting the temperature of the gaseous medium substantially immediately after it leaves the cooler (9, 15).

6. A cooler arrangement according to any one of the foregoing claims, **characterised in that** said heat-supplying element (26) and said cooler (9, 15) are fitted in a region (A) situated at a front portion of the vehicle (1).

## Patentansprüche

1. Kühleranordnung für ein Fahrzeug (1), die durch einen Verbrennungsmotor (2) angetrieben wird, wobei die Kühleranordnung mindestens einen Kühler (9, 15) umfasst, der ein ihn durchströmendes gasförmiges Medium aufweist, das dazu eingerichtet ist, um durch einen äußeren Luftstrom gekühlt zu werden, der während des Betriebs des Verbrennungsmotors (2) in einer vorbestimmten Richtung durch den Kühler (9, 15) strömt, ein wärmezuführendes Element (26), das bezüglich der vorbestimmten Richtung des kühlenden Luftstroms an einer Position stromaufwärts von dem Kühler (9, 15) angeordnet ist, sodass mindestens ein Teil der durch das wärmezuführende Element (26) strömenden Luft auch durch den Kühler (9, 15) strömt, und ein Steuermittel (22, 23), das dazu eingerichtet ist, um das wärmezuführende Element (26) zu aktivieren, sodass die durch das wärmezuführende Element (26) strömende Luft während Zuständen erwärmt wird, in denen ein Risiko besteht, dass das gasförmige Medium in dem Kühler (9, 15) unter eine niedrigste zulässige Temperatur gekühlt wird, wobei das wärmezuführende Element ein Wärmetauscher (26) ist, der dazu eingerichtet ist, um von einem wärmezuführenden Medium während Zuständen durchströmt zu werden, in denen das Risiko besteht, dass das gasförmige Medium in dem Kühler (9, 15) unter die niedrigste zulässige Temperatur gekühlt wird, wobei das Steuermittel ein Ventilmittel (22) umfasst, mit dem es möglich ist, die Zuführung des wärmezuführenden Mediums an den Wärmetauscher (26) zu regeln, und wobei das wärmezuführende Medium ein Kühlmittel ist, das in einem Kühlsystem zum Kühlen des Verbrennungsmotors (2) verwendet wird,
**dadurch gekennzeichnet, dass** das Steuermittel (22, 23) dazu eingerichtet ist, um eine Versorgung des Wärmetauschers (26) mit dem Kühlmittel während Zuständen einzuleiten, in denen das Kühlmittel in dem Kühlungssystem zusätzlicher Kühlung bedarf.

2. Kühleranordnung nach Anspruch 1,
**dadurch gekennzeichnet, dass** der Kühler ein Ladeluftkühler (9) ist und dass das gasförmige Medium komprimierte Luft ist, die dem Verbrennungsmotor (2) zugeleitet wird.

3. Kühleranordnung nach Anspruch 1,
**dadurch gekennzeichnet, dass** der Kühler ein AGR-Kühler (15) ist und dass das gasförmige Medium in Form von Abgasen ausgebildet ist, die dem Verbrennungsmotor (2) rückgeführt werden.

4. Kühleranordnung nach einem der vorhergehenden Ansprüche,
**dadurch gekennzeichnet, dass** das Steuermittel eine Steuereinheit (23) umfasst, die dazu eingerichtet ist, um das wärmezuführende Element (26) auf der Grundlage von Informationen von mindestens einem Sensor (27, 28) zu aktivieren, der einen auf die Temperatur des gasförmigen Mediums in dem Kühler (9, 15) bezogenen Parameter detektiert.

5. Kühleranordnung nach Anspruch 4,
**dadurch gekennzeichnet, dass** der Sensor ein Temperatursensor (27, 28) ist, der dazu eingerichtet ist, um die Temperatur des gasförmigen Mediums, im Wesentlichen unmittelbar nachdem es den Kühler (9, 15) verlässt, zu detektieren.

6. Kühleranordnung nach einem der vorhergehenden Ansprüche,
**dadurch gekennzeichnet, dass** das wärmezuführende Element (26) und der Kühler (9, 15) in einem an einem Vorderabschnitt des Fahrzeugs (1) befindlichen Bereich (A) eingebaut sind.

## Revendications

1. Système refroidisseur pour un véhicule (1) qui est propulsé par un moteur à combustion (2), dans lequel le système refroidisseur comprend au moins un refroidisseur (9, 15) à travers lequel s'écoule un milieu gazeux apte à être refroidi par un flux d'air extérieur qui s'écoule dans une direction particulière à travers le refroidisseur (9, 15) pendant le fonctionnement du moteur à combustion (2), un élément d'apport de chaleur (26) monté dans une position en amont dudit refroidisseur (9, 15) relativement à la direction particulière du flux d'air de refroidissement de manière qu'au moins une partie de l'air qui s'écoule à travers l'élément d'apport de chaleur (26) s'écoule aussi à travers le refroidisseur (9, 15), et des moyens de commande (22, 23) aptes à activer l'élément d'apport de chaleur (26) de manière que l'air qui s'écoule à travers l'élément d'apport de chaleur (26) soit chauffé dans des situations dans lesquelles le milieu gazeux présent dans le refroidisseur (9, 15) risque d'être refroidi au-dessous d'une température extrême inférieure acceptable, l'élément d'apport de chaleur étant un échangeur de chaleur (26) apte à être traversé par un milieu d'apport de chaleur dans des situations dans lesquelles le milieu gazeux présent dans le refroidisseur (9, 15) risque d'être refroidi au-dessous de ladite température minimale acceptable, lesdits moyens de commande comprenant un moyen obturateur (22) à l'aide duquel il est possible de réguler l'apport de milieu d'apport de chaleur à l'échangeur de chaleur (26) et le milieu d'apport de chaleur étant un fluide frigorigène qui est utilisé dans un système de refroidissement servant à refroidir le moteur à combustion (2), **caractérisé en ce que** lesdits moyens de commande (22, 23) sont aussi aptes à déclencher l'envoi du fluide frigorigène à l'échangeur de chaleur (26) dans des situations dans lesquelles le fluide frigorigène présent dans le système de refroidissement demande un refroidissement additionnel.

2. Système refroidisseur selon la revendication 1, **caractérisé en ce que** ledit refroidisseur est un refroidisseur d'air de charge (9) et **en ce que** ledit milieu gazeux est de l'air comprimé qui est envoyé au moteur à combustion (2).

3. Système refroidisseur selon la revendication 1, **caractérisé en ce que** ledit refroidisseur est un refroidisseur de EGR (15) et **en ce que** ledit milieu gazeux revêt la forme de gaz d'échappement qui sont renvoyés en recirculation au moteur à combustion (2).

4. Système refroidisseur selon une quelconque des revendications précédentes, **caractérisé en ce que** ledit moyen de commande comprend une unité de commande (23) apte à activer l'élément d'apport de chaleur (26) sur la base d'une information provenant d'au moins un capteur (27, 28) qui détecte un paramètre lié à la température du milieu gazeux présent dans le refroidisseur (9, 15).

5. Système refroidisseur selon la revendication 4, **caractérisé en ce que** ledit capteur est un capteur de température (27, 28) apte à détecter la température du milieu gazeux, sensiblement immédiatement après qu'il a quitté le refroidisseur (9, 15).

6. Système refroidisseur selon une quelconque des revendications précédentes, **caractérisé en ce que** ledit élément d'apport de chaleur (26) et ledit refroidisseur (9, 15) sont agencés dans une région (A) située au niveau d'une partie avant du véhicule (1).
